# EUROPÄISCHE PATENTSCHRIFT

(11) **EP 3 889 553 B1**
(45) Veröffentlichungstag und Bekanntmachung des Hinweises auf die Patenterteilung: **20.07.2022**
(21) Anmeldenummer: 20168067.5
(22) Anmeldetag: 03.04.2020
(51) Int. Cl.: G01F 1/66, F16K 37/00, G01N 29/032, G01N 29/48

(54) **VERFAHREN UND VORRICHTUNG ZUM DETEKTIEREN VON KAVITATION BEIM DURCHFLUSS EINER FLÜSSIGKEIT DURCH EIN REGELELEMENT**
METHOD AND DEVICE FOR DETECTING CAVITATION IN THE FLOW OF A LIQUID THROUGH A REGULATING ELEMENT
PROCÉDÉ ET DISPOSITIF DE DÉTECTION D'UNE CAVITATION LORS D'UN PASSAGE D'UN LIQUIDE À TRAVERS UN ÉLÉMENT DE RÉGULATION

(43) Veröffentlichungstag der Anmeldung: 06.10.2021
(73) Patentinhaber: Focus-on V.O.F., 3313 LC Dordrecht (NL)
(72) Erfinder: Wagner-Stürz, David, 64367 Mühltal (DE); Bhangu, Kavreet, 83052 Bruckmühl (DE); Boer, Adriaan Hendrik, 3363 CN Sliedrecht (NL)
(74) Vertreter: Köllner & Partner mbB

(56) Entgegenhaltungen:
- WO-A1-2011/001536
- US-A1- 2005 011 278
- US-A1- 2005 087 025
- US-A1- 2007 191 990
- US-A1- 2018 110 913
- ULANICKI BOGUMIL ET AL: "Measurements and Analysis of Cavitation in a Pressure Reducing Valve During Operation - a Case S", PROCEDIA ENGINEERING, Bd. 119, 1. September 2015 (2015-09-01), Seiten 270-279, XP029263366, ISSN: 1877-7058, DOI: 10.1016/J.PROENG.2015.08.886

## Beschreibung

### Gebiet der Erfindung

Die Erfindung betrifft das detektieren von Kavitation mittels Ultraschall.

Kavitation tritt bei Stellventilen im Bereich des Drosselelementes auf. Je nach Ausbildung des Einlass und Auslassbereiches sowie der Stellgliedgeometrie sind Stellventile unterschiedlich stark von Kavitationseffekten betroffen. In der Regel tritt Kavitation dann auf, wenn die Druckdifferenz im Bereich der Drosselstelle sehr hoch ist. An dem Drosselelement und dem Sitzbereich steigt je nach Drosselstellung die Strömungsgeschwindigkeit lokal begrenzt stark an, und der Druck der Flüssigkeit kann dadurch lokal stark abfallen. Wenn der statische Druck der schnell strömenden Flüssigkeit unter den Verdampfungsdruck der Flüssigkeit abfällt, bilden sich Dampfblasen.

Sobald der Druck wieder ansteigt oder die Dampfblasen durch die Strömung in Bereiche der Flüssigkeit mit einem höheren Druck mitgerissen werden, steigt der die Dampfblasen umgebende statische Druck wieder über den Dampfdruck an, so dass die Dampfblasen schlagartig kollabieren. Dabei strömt die umgebende Flüssigkeit implosionsartig in den ursprünglich von der Dampfblase eingenommenen Hohlraum zurück, wodurch sehr kurzzeitig Druckwellen mit hohen Druckspitzen entstehen. Dies wird als Kavitation bezeichnet.

Bei der Implosion der Dampfblasen entsteht regelmäßig ein Flüssigkeitsstrahl, der auch als Mikrojet bezeichnet wird und mit hoher Geschwindigkeit auf die Oberfläche auftrifft. Diese durch den Mikrojet bewirkte schlagartige Druckbelastung beansprucht die Oberfläche stark, da der Impuls bzw. die Gesamtenergie eines Mikrojets zwar gering ist, jedoch der durch die zusammenfallende Dampfblase erzeugte Mikrojet auf einer sehr kleinen Wirkfläche auftrifft und dadurch eine lokal begrenzte, sehr hohe Druckwirkung erzeugen kann.

Treten während der Benutzung des Stellventils der fluidtechnischen Vorrichtung häufig bzw. über einen langen Zeitraum hinweg Kavitationen auf, kann dies zu einer zunehmenden Beschädigung der Oberfläche des Ventilkegels oder des Ventilsitzes oder benachbarter Bereiche führen. Zudem bewirkt Kavitation eine oftmals unerwünschte Geräuschentwicklung und eine nachteilige Reduzierung des Wirkungsgrads des flüssigkeitsdurchströmten Stellventils oder der Pumpe.

### Stand der Technik

Zum Überwachen von Kavitation wird häufig ausgenutzt, dass die Implosion einer Dampfblase ein abklingend gedämpftes Schwingungsverhalten aufweist und diese hochfrequenten Druckwellen die umgebende Flüssigkeit sowie das gesamte Stellventil zu Schwingungen anregen. Bei einer indirekten Kavitationsmessung wird in der Regel der Körperschall der Flüssigkeit oder der Körperschall des Ventilgehäuses durch geeignete akustische Sensoren oder optische Mikrofone gemessen. Derartige Vorgehensweisen sind z.B. in den Veröffentlichungen DE 10 2017 100 956 A1 und EP 3 039 329 B1 beschrieben.

Nachteilig ist daran, dass der messbare Körperschall an einer Vorrichtung an einer prozesstechnischen Anlage stark gedämpft und durch die Masse der Vorrichtung verfälscht ist. Weiterhin werden zusätzlich Störschwingungen erfasst, welche über die Rohrleitung in die Vorrichtung eingekoppelt werden oder z.B. von einem Antrieb der Vorrichtung selbst erzeugt werden. Ein frühzeitiges Erfassen beginnender Kavitation ist somit wegen starker Dämpfung und Störfrequenzen nicht möglich.

Eine Messung des Körperschalls der Flüssigkeit ist lokal sehr begrenzt, so dass das gesamte Ausmaß an Kavitation in einer Vorrichtung nicht erfassbar ist. Die sich ergebenden Frequenzen sind z.B. innerhalb eines Ventils oder auch in dessen Auslass sehr unterschiedlich. Ein präzises frühzeitiges Erfassen beginnender Kavitation ist somit auch auf diese Weise nicht möglich.

Es ist ebenfalls bekannt, mittels eines Ultraschallsenders die Anfangssignalstärke mit der durch einen Empfänger erhaltene Signalstärke zu vergleichen. Je mehr Dampf sich in der Flüssigkeit befindet, desto mehr wird das Anfangssignal reduziert. Gase weisen im Allgemeinen eine stark mit der Frequenz steigende Dämpfung für Ultraschall auf, während sich Ultraschall in Flüssigkeiten dagegen dämpfungsarm ausbreitet. Im Falle von Kavitation entstehen Dampfblasen in der Flüssigkeit, und zwar umso mehr, je intensiver die Kavitation ist. Dieser Effekt ist z.B. aus den Dokumenten US 2007/191990 A1 und EP 1 435 511 A2 bereits bekannt. Ein Nachteil ist hierbei, dass keine Referenzierung der Signalstärke des Prozessfluides im Vorfeld einer möglichen Kavitationsbildung stattfindet. Es ist deshalb nicht unterscheidbar, ob sich das Fluid verändert hat oder tatsächlich Kavitation auftritt. Ein präzises frühzeitiges Erfassen beginnender Kavitation ist somit nicht möglich.

Bei all den oben beschrieben Systemen ist keine Vorerkennung vorgesehen oder möglich, mit der eine Kavitationsbildung reduziert oder vollständig verhindert werden könnte.

### Aufgabe

Aufgabe der Erfindung ist es, ein Verfahren und eine Vorrichtung anzugeben, welche das gesamte Ausmaß von Kavitation an einem Regelelement, z.B. in einer prozesstechnischen Anlage, unabhängig von der exakten Zusammensetzung der Flüssigkeit, möglichst frühzeitig erfassen, und zudem eine Optimierung der Stellung und/oder Eigenschaften des Regelelements zur Vermeidung von Kavitation ermöglichen.

### Lösung

Diese Aufgabe wird durch den Gegenstand des unabhängigen Anspruchs gelöst. Vorteilhafte Weiterbildungen des Gegenstands des unabhängigen Anspruchs sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zum Detektieren von Kavitation beim Durchfluss einer Flüssigkeit durch ein Regelelement vorgeschlagen. Das Verfahren umfasst die folgenden Schritte:
- Herstellen eines Fließzustands der Flüssigkeit durch das Regelelement, bei dem keine Kavitation auftritt. Dies kann z.B. bei der Inbetriebnahme des Regelelements geschehen.
- Messen der Transmission eines Ultraschallsignals durch die Flüssigkeit in einem Zulauf des Regelelements in diesem Fließzustand.
- Messen der Transmission eines Ultraschallsignals durch die Flüssigkeit in einem Ablauf des Regelelements in diesem Fließzustand.
- Bilden einer Vergleichsgröße zum Vergleichen der beiden gemessenen Transmissionen in diesem Fließzustand.
- Speichern der Vergleichsgröße als Referenzwert.
- Messen der Transmission eines Ultraschallsignals durch die Flüssigkeit in dem Zulauf des Regelelements in einem Betriebszustand.
- Messen der Transmission eines Ultraschallsignals durch die Flüssigkeit in dem Ablauf des Regelelements in dem Betriebszustand.
- Bilden der Vergleichsgröße zum Vergleichen der beiden gemessenen Transmissionen in dem Betriebszustand.
- Vergleichen des Referenzwerts mit der in dem Betriebszustand ermittelten Vergleichsgröße.
- Feststellen, dass Kavitation vorliegt, wenn der Vergleich des Referenzwerts mit der in dem Betriebszustand ermittelten Vergleichsgröße ein Absinken der Transmission des Ultraschallsignals im Ablauf des Regelelements um mehr als einen vorgegebenen Schwellwert anzeigt.

Auf diese Weise lässt sich Kavitation an einem Regelelement zuverlässig feststellen. Durch die vorab erfolgte Referenzmessung ist sichergestellt, dass die Ergebnisse für das betrachtete Regelelement zutreffen. Das Bilden von Vergleichsgrößen erlaubt es, das vollständige Ausmaß der Kavitation an dem Regelelement zu erfassen und in sinnvoller Weise zu untersuchen. Dadurch kann erkannt werden, wann Kavitation auftritt und wann nicht, was ermöglicht, Strategien und/oder Einstellungen zu finden, die das Auftreten von Kavitation an dem betrachteten Regelelement verhindern oder zumindest minimieren.

Ergebnisse des Verfahrens lassen sich besonders gut mathematisch auswerten, wenn der Schritt des Vergleichens durch das Bilden eines Quotienten erfolgt.

Wann genau an dem Regelelement Kavitation auftritt, lässt sich besonders gut ermitteln, wenn der zeitliche Verlauf des Quotienten erfasst wird und Veränderungen des Quotienten gespeichert und/oder als Meldung ausgegeben werden. Dies ermöglicht ggf. auch Rückschlüsse auf Einstellungen des Regelelements, mit denen Kavitation verursacht bzw. vermieden wird.

Besonders Vorteilhaft ist es daher, wenn der Durchfluss der Flüssigkeit durch das Regelelement durch Verändern von Stellungen der Komponenten des Regelelements derart geregelt wird, dass die Kavitation nicht mehr auftritt, wenn Kavitation detektiert worden ist. Erfolgt diese Regelung schnell genug, kann Kavitation an dem Regelelement weitgehend vermieden werden.

Diese Regelung wird nachvollziehbar und reproduzierbar, wenn die Stellungen der Komponenten des Regelelements, bei denen Kavitation einsetzt und/oder nicht mehr auftritt, gespeichert werden. Zusätzlich oder alternativ kann in einer Situation, in der Kavitation einsetzt und/oder nicht mehr auftritt, eine Meldung, z.B. ein Warnsignal, ausgegeben werden. Dies sind sogenannte "kritische" Stellungen bzw. "kritische" Werte - typischerweise eine Stellung des Stellgliedes eines Stellventils oder eine kritische Durchflussmenge oder Druckdifferenz oder eine kritische Drehzahl einer Pumpe.

Unnötiges Verstellen des Regelelements lässt sich vermeiden, wenn die gespeicherten Stellungen der Komponenten des Regelelements als Schranken für die Steuerung und/oder Regelung des Regelelements verwendet werden. Auf diese Weise kann erreicht werden, dass die Komponenten des Regelelements von der Steuerung bzw. Regelung überwiegend innerhalb der Parameterbereiche verstellt werden, in denen normalerweise keine Kavitation auftritt.

Im Hinblick auf ggf. notwendige Untersuchungen oder Wartungsvorgänge ist es von Vorteil, wenn ein Warnsignal ausgegeben wird, wenn eine Stellung der Komponenten des Regelelements für mehr als eine vorgegebene Zeit außerhalb der gespeicherten Schranken liegt. Dann ist nämlich davon auszugehen, dass an dem Regelelement irgendetwas nicht mehr dem Normalzustand entspricht.

Unter der Voraussetzung, dass in dem Zulauf und dem Ablauf des Regelelements jeweils mindestens ein Ultraschall-Sender und/oder -Empfänger angeordnet ist, kann die Zuverlässigkeit des Verfahrens dadurch erhöht werden, dass die Leistung aller Ultraschall-Sender erhöht wird, wenn das Signal an mindestens einem der Ultraschall-Empfänger zu schwach ist. Dadurch kann sichergestellt werden, dass immer auswertbare Daten verfügbar sind. Insbesondere wird die Leistung aller Sender erhöht, wenn das Signal am in Strömungsrichtung der Flüssigkeit hinter dem Regelelement gelegenen Ultraschall-Sensor zu schwach ist, was z.B. bei unvermittelt einsetzender starker Kavitation der Fall sein könnte, wenn die entstehenden Blasen langlebig sind, z.B. im Falle von "weicher" oder sogar stabiler Gaskavitation.

Das Ermitteln kritischer Durchflusswerte des Regelelements gelingt besonders gut, wenn (unter der genannten Voraussetzung, dass im Zulauf und Ablauf des Regelelements jeweils mindestens ein Ultraschall-Sender und/oder -Empfänger angeordnet ist) die Ultraschall-Sender und/oder -Empfänger zum Bestimmen des Durchflusses der Flüssigkeit durch das Regelelement genutzt werden. Der Durchfluss, bei dem Kavitation einsetzt und/oder nicht mehr auftritt, wird dann gespeichert und/oder als Meldung ausgegeben. Das Verwenden von Ultraschall-Sensoren zur Durchflussmessung ist ein hinlänglich bekanntes Vorgehen (siehe z.B. https://de.wikipedia.org/wiki/Ultraschall-Durchflussmesser).

Wenn im Zulauf und Ablauf des Regelelements jeweils ein Drucksensor angeordnet ist, kann die Druckdifferenz gemessen werden. Diese kann in Situationen, bei denen Kavitation einsetzt und/oder nicht mehr auftritt, gespeichert werden. Damit steht eine weitere kritische Schranke zur Verfügung, mit deren Hilfe Kavitation verhindert werden kann.

Wenn Kavitation einsetzt oder nicht mehr auftritt, kann die Druckdifferenz auch in Kombination mit anderen momentanen Werten, etwa der momentanen Stellung der Komponenten des Regelelements, gespeichert werden. Auf diese Weise lässt sich eine Korrelation zwischen der Druckdifferenz und z.B. des Öffnungsquerschnitts eines Regelelements ermitteln, bei denen Kavitation einsetzt oder aufhört. Diese Kombination erlaubt eine genaue und flexible Steuerung der Anlage zur Vermeidung von Kavitation.

Die Aufgabe wird zudem gelöst durch eine Vorrichtung. Diese hat ein Regelelement zur Regelung des Durchflusses einer Flüssigkeit durch das Regelelement. Auch hat sie einem Zulauf zum Regelelement und einem Ablauf vom Regelelement. Zudem hat sie im Zulauf zum Regelelement mindestens eine Einrichtung zum Messen der Transmission eines Ultraschallsignals durch die Flüssigkeit. Auch im Ablauf vom Regelelement hat die Vorrichtung mindestens eine Einrichtung zum Messen der Transmission eines Ultraschallsignals durch die Flüssigkeit. Ferner sind Mittel zum Vergleichen der gemessenen Transmissionen vorhanden. Die Vorrichtung weist außerdem eine Steuerung zur Durchführung des Verfahrens, wie es weiter oben beschrieben wurde, auf. Mit dieser Vorrichtung lässt sich das weiter oben beschriebene Verfahren durchführen. Somit werden sämtliche Vorteile dieses Verfahrens erzielt.

Vorzugsweise ist als Einrichtung zur Messung der Transmission eines Ultraschallsignals ein Ultraschall-Sender mit einem durch die Flüssigkeit betrachtet gegenüber angeordneten Ultraschall-Empfänger vorgesehen. Zusätzlich oder alternativ dazu kann ein Ultraschall-Sensor, der sowohl zum Senden als auch zum Empfangen geeignet ist, mit mindestens einem durch die Flüssigkeit betrachtet gegenüber angeordneten Ultraschall-Reflektor, vorgesehen sein.

Zum Ermitteln kritischer Druckwerte ist es vorteilhaft, wenn zusätzlich mindestens ein Drucksensor vorhanden ist.

Wenn ein Drucksensor im Zulauf und ein Drucksensor im Ablauf vorhanden ist, kann die Druckdifferenz zwischen Zulauf und Ablauf gemessen werden. Es kann dann auch diejenige mindestens eine Druckdifferenz ermittelt werden, bei der Kavitation auftritt, und ggf. aufhört. Diese kann bzw. können wiederum als Schranke bzw. Schranken gespeichert werden.

Schallemissionen, die auf das Entstehen von Kavitation an dem betrachteten Regelelement hinweisen können, lassen sich ermitteln, wenn in der beschriebenen Vorrichtung zusätzlich mindestens ein akustischer Sensor vorhanden ist.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Ein Ausführungsbeispiel ist in der Figur schematisch dargestellt. Im Einzelnen zeigt:

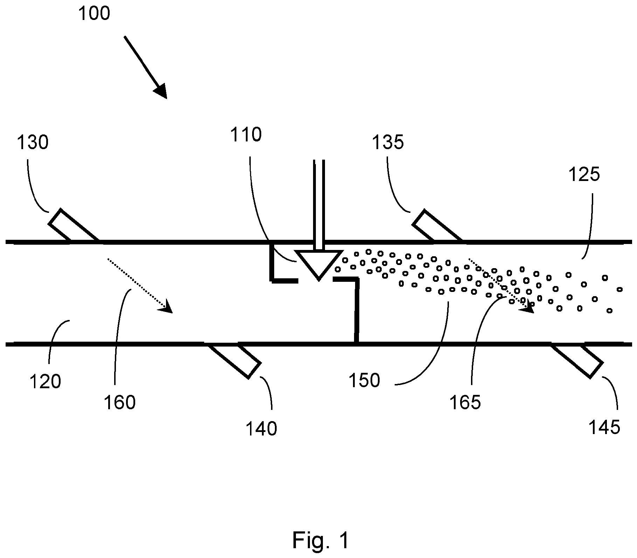

- Fig. 1: eine schematische Darstellung einer erfindungsgemäßen Vorrichtung.

Fig. 1 zeigt eine erfindungsgemäße Vorrichtung 100 mit einem Stellventil als Regelelement 110. Sowohl im Zulauf 120 zum Regelelement als auch im Ablauf 125 vom Regelelement sind jeweils Einrichtungen zum Messen der Transmission eines Ultraschallsignals durch die Flüssigkeit, die das Regelelement 110 durchströmen kann, vorhanden. In diesem konkreten Ausführungsbeispiel sind diese Einrichtungen zum Messen der Transmission eines Ultraschallsignals durch jeweils einen Ultraschall-Sender 130, 135 sowie einen gegenüber angeordneten Ultraschall-Empfänger 140, 145 verwirklicht. Es sind aber auch andere Konfigurationen zum Messen der Transmission eines Ultraschallsignals durch die Flüssigkeit vorstellbar.

Durch die am Regelelement 110 einsetzende Kavitation entstehen Dampfblasen 150 in der Flüssigkeit, die die Transmission des Ultraschallsignals 165 im Ablauf 125 gegenüber der Transmission des Ultraschallsignals 160 im Zulauf 120 des Regelelementes 110 abschwächen. Eine Steuerung (hier nicht dargestellt) zeichnet die gemessenen Transmissionswerte auf und wertet sie aus.

Im Zulauf 120 eines Regelelements, z.B. eines Stellventils 110, werden ein oder mehrere Ultraschallsensoren angeordnet. Bevorzugt kann es sich dabei um mindestens einen Sender 130 und einen Empfänger 140 handeln. Ein Ultraschallsignal 160 wird durch die Flüssigkeit gesendet und vom Empfangssensor 140 aufgenommen. Dieser Empfänger ist durch die Flüssigkeit betrachtet gegenüber angeordnet, wobei die Signalrichtung vom Sender zum Empfänger nicht senkrecht zur Fließrichtung der Flüssigkeit sein muss - in Fig. 1 sind Ultraschallsender 130 und -Empfänger 140 beispielsweise so angeordnet, dass das Ultraschallsignal in einem deutlich von 90° abweichenden Winkel durch die Flüssigkeit läuft. Eine solche Anordnung ist z.B. für das Messen des Durchflusses mittels Ultraschall bekannt (siehe z.B. https://de.wikipedia.org/wiki/Ultraschall-Durchflussmesser). Die Differenz der Signalstärke von Sende- zum Empfangssignal hängt von der spezifischen Zusammensetzung, d.h. insbesondere von der Dichte, des Prozessmediums im Zulauf 120 des Stellventils ab.

Alternativ können im Zulauf 120 des Stellventils mindestens ein Ultraschallsender und mindestens eine Reflexionsfläche angeordnet sein. Das Ultraschallsignal wird durch die Flüssigkeit gesendet, an der Reflexionsfläche reflektiert und trifft wiederum auf denselben Ultraschallsensor, welcher nun das Signal detektiert. In diesem Falle dient derselbe Ultraschallsensor als Sender und Empfänger zugleich.

Im Ablauf 125 des Stellventils 110 sind ebenfalls Ultraschallsensoren 135, 145 angeordnet. Diese entsprechen von der Anordnung her denen im Zulauf: So können ein Sender 135 und ein Empfänger 145 durch die Flüssigkeit betrachtet gegenüber angeordnet sein, oder es kann ein Sensor, der sowohl als Sender als auch als Empfänger arbeitet, mit einer gegenüber angeordneten Reflexionsfläche Verwendung finden. Auch an dieser Stelle kann die Anordnung so sein, dass das Ultraschallsignal in einem deutlich von 90° abweichenden Winkel durch die Flüssigkeit läuft. Die Sendeleistung im Ablauf 125 des Ventils 110 sollte der Sendeleistung im Zulauf 120 zum Stellventil 110 entsprechen, um eine möglichst einfache Vergleichbarkeit zu schaffen. Auch hier hängt die Differenz der Signalstärke von Sende- zum Empfangssignal von der spezifischen Zusammensetzung des Prozessmediums im Ablauf 125 des Stellventils ab. Diese sollte sich allerdings nicht verändert haben - der Vergleich der Differenzen der Sende- und Empfangsleistung im Einlass 120 und im Auslass 125 hängt daher von einer Zunahme an Dampfblasen 150 beim Durchfluss durch das Regelelement ab. Der Zugewinn an Dampfblasen 150 ist eine direkte Folge der Kavitation an der Drosselstellen des Regelelements. Mit diesem Verfahren kann also präzise eine beginnende oder veränderte Kavitations-Situation erfasst werden.

Die Idee der Erfindung beruht darauf, dass Dampfblasen oder auch andere Fremdkörper in einem flüssigen Prozessmedium die Amplitude eines hindurchlaufenden Ultraschallsignals beeinflussen. Die von einem Empfänger detektierte Amplitude eines solchen Ultraschallsignals hängt von der Dichte des Prozessmediums und der Laufstrecke durch das Prozessmedium ab. Die genaue Dichte ist allerdings häufig nicht oder nur ungenau bekannt, und außerdem können andere Effekte, wie beispielsweise Übergangsbereiche der Sensorik selbst weitere Ungenauigkeiten verursachen.

Um nun eine Aussage über Kavitation am Ausgang eines Regelelementes, z.B. eines Ventils, einer Stellklappe oder einer Pumpe, machen zu können, werden ein Ultraschall-Sensor im Einlassbereich des Regelelements und einer im Auslassbereich des Regelelements platziert. Beide Sensoren werden miteinander und bei einheitlichem Medium kalibriert. Wenn nun während des regulären Betriebs der Anlage die am Sensor im Auslassbereich gemessene Amplitude im Vergleich zur im Einlassbereich gemessenen abfällt, kann auf Gasblasen in der Flüssigkeit geschlossen werden. Der Sensor im Einlassbereich bietet jederzeit eine Referenz für die tatsächliche Dichte des flüssigen Prozessmediums. Somit kann der Einfluss von Schwankungen in der Dichte oder Zusammensetzung des Prozessmediums auf die Kavitationserkennung eliminiert werden.

Werden an mehreren Stellen bzw. Regelelementen solche Anordnungen von Sensoren bereitgestellt, um erfindungsgemäße Verfahren durchzuführen, können auf diese Weise in einer größeren Prozessanlage Quellen von Kavitation lokalisiert werden.

Um Energie zu sparen, ist es von Vorteil, die Leistung des Ultraschallsenders 130 im Zulauf 120 ständig mit dem Pegel des Empfängers 145 im Ablauf 125 des Regelelements zu vergleichen und die Sendeleistung sowohl eingangsseitig als auch ausgangsseitig zu erhöhen, falls der empfangene Pegel am Ablauf 125 zu klein wird oder sogar verschwindet. Wird die Sendeleistung bei einem hohen Pegel des Empfängers 145 im Ablauf 125 entsprechend für alle Sender 130, 140 auch wieder reduziert, kann auf diese Weise die Sendeleistung an die momentane Dämpfung des Signals angepasst werden und es muss nicht ständig eine hohe Leistung zur Verfügung gestellt werden.

Zusätzliche Kenntnis des Durchflusses des flüssigen Prozessmediums durch das Regelelement ist vorteilhaft, weil damit genauere Kenntnis über Fließzustände, bei denen Kavitation auftritt, ermöglicht wird. Dies ist grundsätzlich mit derselben Ultraschallsensorik möglich, die erfindungsgemäß zur Kavitationsdetektion verwendet wird.

Charakteristische Durchflusswerte, Druckdifferenzen oder auch Einstellungen des Regelelements, z.B. die Stellung eines Stellventils oder einer Stellklappe oder die Drehzahl einer Pumpe, sind von besonderem Interesse, da bei diesen Kavitation am betrachteten Regelelement einsetzt oder aufhört.

Um diese Werte zu bestimmen, ist es von Vorteil, wenn sowohl im Zulauf 120 als auch im Ablauf 125 des Regelelements 110 Drucksensoren (nicht gezeigt) bereitgestellt werden. Die Ultraschallsensoren 130, 135, 140, 145 lassen sich, wie bereits dargestellt, ebenfalls zur Durchflussmessung verwenden.

Diese Charakteristischen Werte bzw. Schwellwerte können in der Steuerung des Regelelements als Parameter zur Vermeidung von Kavitation berücksichtigt werden. Zudem ist es sinnvoll, beim Erreichen oder Überschreiten dieser Schwellwerte ein Warnsignal auszugeben.

Angestrebt wird hierbei, Korrelationen der Durchflusswerte, der Druckdifferenzen und/oder der Stellgliedpositionen bzw. Pumpendrehzahlen zu finden, bei welchen Kavitation beginnt und diese in der Steuerung zu verwenden, um Kavitation zu vermeiden oder zumindest zu minimieren.

Gegebenenfalls kann es in diesem Zusammenhang auch nützlich sein, zusätzlich akustische Sensoren bereitzustellen, mit denen sich eine durch das erfindungsgemäße Verfahren ermittelte Kavitation verifizieren lässt. In einer weiteren Ausgestaltung lassen sich für das Regelelement charakteristische akustische Signale bestimmen, die das Einsetzen von Kavitation anzeigen. Diese können als zusätzliches Detektionskriterium zum Einsatz kommen.

Für eine detaillierte Analyse der Entstehung und Ausbreitung von Kavitation am betrachteten Regelelement ist es hilfreich, die genannten charakteristischen Werte sowie den Verlauf der Intensität auftretender Kavitation aufzuzeichnen.

### Glossar

### Durchfluss

Dies bezeichnet einen Volumenstrom durch ein Anlagen- bzw. Prozesselement. Dieser wird z.B. von einem Durchflussmesser gemessen. Allgemein gilt für den Volumenstrom Q = *dV*/*dt.* Sind Querschnittsfläche A des durchströmten Elements und mittlere Fließgeschwindigkeit *vₘ* bekannt, gilt *Q* = *vₘ* * *A.*

### Kavitation

Kavitation ist die Bildung und Auflösung von Dampfblasen in Flüssigkeiten. Man unterscheidet zwei Grenzfälle, zwischen denen es viele Übergangsformen gibt:
- Bei der Dampfkavitation oder harten (transienten) Kavitation enthalten die Hohlräume hauptsächlich Dampf der umgebenden Flüssigkeit. Solche Hohlräume fallen unter Einwirkung des äußeren Drucks per Blasenimplosion zusammen (mikroskopischer Dampfschlag).
- Bei der weichen Gaskavitation treten in der Flüssigkeit gelöste Gase in die Hohlräume ein und dämpfen deren Kollaps. Bei der stabilen Gaskavitation verhindern sie ihn.

Die häufigsten Verursacher für Kavitation sind schnell bewegte Objekte in einem Fluid, z.B. die Laufräder von Kreiselpumpen, Wasserturbinen oder Propellern. Nach dem Gesetz von Bernoulli ist der statische Druck einer Flüssigkeit umso geringer, je höher die Geschwindigkeit ist. Fällt der statische Druck unter den Verdampfungsdruck der Flüssigkeit, so bilden sich Dampfblasen. Diese werden anschließend meist mit der strömenden Flüssigkeit in Gebiete höheren Druckes mitgerissen. Mit dem erneuten Ansteigen des statischen Drucks über den Dampfdruck kondensiert der Dampf in den Hohlräumen schlagartig, und die Dampfblasen kollabieren. Dabei treten extreme Druck- und Temperaturspitzen auf.

Starke Druckschwankungen, die Kavitation auslösen, können auch durch Ultraschall erzeugt werden. Dabei kommt es in den Druckminima der Schwingung zur Kavitation.

Tritt Kavitation an der Oberfläche fester Körper (wie zum Beispiel eines Schiffspropellers) auf, kommt es unter Umständen zu Beschädigungen, dem sogenanntem Kavitationsfraß. Beim Implodieren der Hohlräume treten kurzzeitig extrem hohe Beschleunigungen, Temperaturen und Drücke auf. Durch diese hohen mechanischen Beanspruchungen wird das Oberflächenmaterial in mikroskopisch kleinen Teilen deformiert, so dass nach einiger Zeit aus der Oberfläche größere Partikel herausbrechen.

### Regelelement

Mit dem Begriff Regelelement werden alle die Komponenten einer prozesstechnischen Anlage bezeichnet, die geeignet sind, den Durchfluss eines fluiden Mediums in grundsätzlich regelbarer Weise zu verändern. Besonders bekannte Beispiele sind Stellventile, Stellklappen, Schieber oder Pumpen.

### Bezugszeichen

- 100: Vorrichtung zum Detektieren von Kavitation
- 110: Regelelement (Stellventil)
- 120: Zulauf zum Regelelement
- 125: Ablauf vom Regelelement
- 130, 135: Ultraschall-Sender
- 140, 145: Ultraschall-Empfänger
- 150: Dampfblasen
- 160, 165: Ultraschallsignal

### zitierte Literatur

### zitierte Patentliteratur

DE 10 2017 100 956 A1
EP 3 039 329 B1
EP 1 435 511 A2

### zitierte Nicht-Patentliteratur

https://de.wikipedia.org/wiki/Ultraschall-Durchflussmesser, abgerufen am 21.01.2020

## Patentansprüche

1. Verfahren zum Detektieren von Kavitation beim Durchfluss einer Flüssigkeit durch ein Regelelement (110) mit den folgenden Schritten:
1.1 Herstellen eines Fließzustands der Flüssigkeit durch das Regelelement (110), bei dem keine Kavitation auftritt;
1.1.1 Messen der Transmission eines Ultraschallsignals (160) durch die Flüssigkeit in einem Zulauf (120) des Regelelements in diesem Fließzustand;
1.1.2 Messen der Transmission eines Ultraschallsignals (165) durch die Flüssigkeit in einem Ablauf (125) des Regelelements in diesem Fließzustand;
1.1.3 Bilden einer Vergleichsgröße zum Vergleichen der beiden gemessenen Transmissionen in diesem Fließzustand;
1.1.4 Speichern der Vergleichsgröße als Referenzwert;
1.2 Messen der Transmission eines Ultraschallsignals (160) durch die Flüssigkeit in dem Zulauf (120) des Regelelements in einem Betriebszustand;
1.3 Messen der Transmission eines Ultraschallsignals (165) durch die Flüssigkeit in dem Ablauf (125) des Regelelements in dem Betriebszustand;
1.4 Bilden der Vergleichsgröße zum Vergleichen der beiden gemessenen Transmissionen in dem Betriebszustand;
1.5 Vergleichen des Referenzwerts mit der in dem Betriebszustand ermittelten Vergleichsgröße;
1.6 Feststellen, dass Kavitation (150) vorliegt, wenn der Vergleich des Referenzwerts mit der in dem Betriebszustand ermittelten Vergleichsgröße ein Absinken der Transmission des Ultraschallsignals im Ablauf des Regelelements um mehr als einen vorgegebenen Schwellwert anzeigt.

2. Verfahren nach dem vorhergehenden Anspruch,
**dadurch gekennzeichnet,**
**dass** der Schritt des Vergleichens durch das Bilden eines Quotienten erfolgt.

3. Verfahren nach dem vorhergehenden Anspruche,
**dadurch gekennzeichnet,**
**dass** der zeitliche Verlauf des Quotienten erfasst wird; und
**dass** Veränderungen des Quotienten gespeichert und/oder als Meldung ausgegeben werden.

4. Verfahren nach einem der vorhergehenden Ansprüche,
**dadurch gekennzeichnet,**
**dass** der Durchfluss der Flüssigkeit durch das Regelelement (110) durch Verändern von Stellungen der Komponenten des Regelelements derart geregelt wird, dass die Kavitation nicht mehr auftritt, wenn Kavitation detektiert worden ist.

5. Verfahren nach dem vorhergehenden Anspruch,
**dadurch gekennzeichnet,**
5.1 dass in Situationen, bei denen Kavitation einsetzt und/oder nicht mehr auftritt,
5.1.1 die Stellungen der Komponenten des Regelelements gespeichert werden und / oder
5.1.2 eine Meldung ausgegeben wird.

6. Verfahren nach dem vorhergehenden Anspruch,
**dadurch gekennzeichnet,**
**dass** die gespeicherten Stellungen der Komponenten des Regelelements (110) als Schranken für die Steuerung und/oder Regelung des Regelelements verwendet werden.

7. Verfahren nach dem vorhergehenden Anspruch,
**dadurch gekennzeichnet,**
**dass** ein Warnsignal ausgegeben wird, wenn eine Stellung der Komponenten des Regelelements (110) für mehr als eine vorgegebene Zeit außerhalb der gespeicherten Schranken liegt.

8. Verfahren nach einem der vorhergehenden Ansprüche,
8.1 wobei im Zulauf (120) und Ablauf (125) des Regelelements (110) jeweils mindestens ein Ultraschall-Sender (130, 135) und/oder -Empfänger (140, 145) angeordnet ist,
**dadurch gekennzeichnet,**
8.2 dass die Leistung aller Ultraschall-Sender (130, 135) erhöht wird, wenn das Signal an mindestens einem der Ultraschall-Empfänger (140, 145) zu schwach ist.

9. Verfahren nach einem der vorhergehenden Ansprüche,
9.1 wobei im Zulauf (120) und Ablauf (125) des Regelelements (110) jeweils mindestens ein Ultraschall-Sender (130, 135) und/oder -Empfänger (140, 145) angeordnet ist,
**dadurch gekennzeichnet,**
9.2 dass die Ultraschall-Sender (130, 135) und/oder -Empfänger (140, 145) zum Bestimmen des Durchflusses der Flüssigkeit durch das Regelelement (110) genutzt werden; und
9.3 dass der Durchfluss, bei dem Kavitation (150) einsetzt und/oder nicht mehr auftritt, gespeichert und/oder als Meldung ausgegeben wird.

10. Verfahren nach einem der vorhergehenden Ansprüche,
10.1 wobei im Zulauf (120) und Ablauf (125) des Regelelements (110) jeweils ein Drucksensor angeordnet ist,
**dadurch gekennzeichnet,**
10.2 dass in Situationen, bei denen Kavitation einsetzt und/oder nicht mehr auftritt, die zugehörige Druckdifferenz gespeichert wird.

11. Verfahren nach dem vorhergehenden Anspruch,
**dadurch gekennzeichnet,**
**dass** zusätzlich zur Druckdifferenz auch die jeweilige momentane Stellung der Komponenten des Regelelements (110) gespeichert werden.

12. Vorrichtung (100) mit
12.1 einem Regelelement (110) zur Regelung des Durchflusses einer Flüssigkeit durch das Regelelement;
12.2 einem Zulauf (120) zum Regelelement; und
12.3 einem Ablauf (125) vom Regelelement;
12.4 mindestens einer Einrichtung (130, 140) zum Messen der Transmission eines Ultraschallsignals (160) durch die Flüssigkeit im Zulauf (120) zum Regelelement (110); und
12.5 mindestens einer Einrichtung (135, 145) zum Messen der Transmission eines Ultraschallsignals (165) durch die Flüssigkeit im Ablauf (125) vom Regelelement;
12.6 Mitteln zum Vergleichen der gemessenen Transmissionen; und mit
12.7 einer Steuerung zur Durchführung des Verfahrens nach einem der Verfahrensansprüche 1 bis 11.

13. Vorrichtung nach dem vorhergehenden Anspruch,
**dadurch gekennzeichnet,**
13.1 dass als Einrichtung zur Messung der Transmission eines Ultraschallsignals (160, 165) ein Ultraschall-Sender (130, 135) mit einem durch die Flüssigkeit betrachtet gegenüber angeordneten Ultraschall-Empfänger (140, 145)
und/oder
13.2 ein Ultraschall-Sensor, der sowohl zum Senden als auch zum Empfangen geeignet ist, mit mindestens einem durch die Flüssigkeit betrachtet gegenüber angeordneten Ultraschall-Reflektor
vorgesehen ist.

14. Vorrichtung nach einem der beiden vorhergehenden Ansprüche, **dadurch gekennzeichnet,**
**dass** zusätzlich mindestens ein Drucksensor vorhanden ist.

15. Vorrichtung nach dem vorhergehenden Anspruch,
**dadurch gekennzeichnet,**
**dass** ein Drucksensor im Zulauf und ein Drucksensor im Ablauf vorhanden ist.

16. Vorrichtung nach einem der Ansprüche 12 bis 15,
**dadurch gekennzeichnet,**
**dass** zusätzlich mindestens ein akustischer Sensor vorhanden ist.

## Claims

1. A method for detecting cavitation in the flow of a liquid through a control element (110), comprising the following steps:
1.1 establishing a flow state of the liquid through the control element (110) in which no cavitation occurs;
1.1.1 measuring the transmission of an ultrasonic signal (160) through the liquid in an inlet (120) of the control element in this flow state;
1.1.2 measuring the transmission of an ultrasonic signal (165) through the liquid in an outlet (125) of the control element in this flow state;
1.1.3 forming a comparative quantity to compare the two measured transmissions in this flow state;
1.1.4 storing the comparative quantity as a reference value;
1.2 measuring the transmission of an ultrasonic signal (160) through the liquid in the inlet (120) of the control element in an operating state;
1.3 measuring the transmission of an ultrasonic signal (165) through the liquid in the outlet (125) of the control element in the operating state;
1.4 forming the comparative quantity for comparing the two measured transmissions in the operating state;
1.5 comparing the reference value with the comparative quantity determined in the operating state;
1.6 determining that cavitation (150) is present if the comparison of the reference value with the comparative quantity determined in the operating state indicates a decrease in the transmission of the ultrasonic signal in the outlet of the control element by more than a predetermined threshold value.

2. A method according to the preceding claim,
**characterized in that**
the comparing step occurs by forming a quotient.

3. A method according to the preceding claim,
**characterized in that**
the chronological sequence of the quotient is recorded; and
that changes to the quotient are stored and/or output as a notification.

4. A method according to one of the preceding claims,
**characterized in that**
when cavitation has been detected, the flow of the liquid through the control element (110) is controlled by changing positions of the components of the control element in such a way that cavitation no longer occurs.

5. A method according to the preceding claim,
**characterized in that**
5.1 in situations, in which cavitation begins and/or no longer occurs,
5.1.1 the positions of the components of the control element are stored and / or
5.1.2 a notification is output.

6. A method according to the preceding claim,
**characterized in that**
the stored positions of the components of the control element (110) are used as limits for the control and/or regulation of the control element.

7. A method according to the preceding claim,
**characterized in that**
a warning signal is output if a position of the components of the control element (110) is outside the stored limits for more than a predetermined time.

8. A method according to one of the preceding claims,
8.1 wherein at least one ultrasonic transmitter (130, 135) and/or receiver (140, 145) is located in the inlet (120) and outlet (125) of the control element (110), respectively,
**characterized in that**
8.2 the power of all ultrasonic transmitters (130, 135) is increased if the signal at at least one of the ultrasonic receivers (140, 145) is too weak.

9. A method according to one of the preceding claims,
9.1 wherein at least one ultrasonic transmitter (130, 135) and/or receiver (140, 145) is located in the inlet (120) and outlet (125) of the control element (110), respectively,
**characterized in that**
9.2 the ultrasonic transmitters (130, 135) and/or receivers (140, 145) are used to determine the flow of the liquid through the control element (110); and
9.3 that the flow at which cavitation (150) begins and/or no longer occurs, is stored and/or output as a notification.

10. A method according to one of the preceding claims,
10.1 wherein a pressure sensor is located in the inlet (120) and outlet (125) of the control element (110), respectively,
**characterized in that**
10.2 in situations in which cavitation begins and/or no longer occurs, the corresponding pressure difference is stored.

11. A method according to the preceding claim,
**characterized in that**
in addition to the pressure difference, the respective momentary position of the components of the control element (110) are also stored.

12. A device (100) having
12.1 a control element (110) for regulating the flow of a liquid through the control element;
12.2 an inlet (120) to the control element; and
12.3 an outlet (125) from the control element;
12.4 at least one apparatus (130, 140) for measuring the transmission of an ultrasonic signal (160) through the liquid in the inlet (120) of the control element (110); and
12.5 at least one apparatus (135, 145) for measuring the transmission of an ultrasonic signal (165) through the liquid in the outlet (125) of the control element;
12.6 means for comparing the measured transmissions; and having
12.7 a control for performing a method according to one of the method claims 1 to 11.

13. A device according to the preceding claim,
**characterized in that**
13.1 an ultrasonic transmitter (130, 135) with an ultrasonic receiver (140, 145) arranged opposite as seen through the liquid
and/or
13.2 an ultrasonic sensor, which is suitable for both transmitting and receiving, with at least one ultrasonic reflector arranged opposite as seen through the liquid is provided as apparatus for measuring the transmission of an ultrasonic signal (160, 165).

14. A device according to one of the two preceding claims,
**characterized in that**
at least one pressure sensor is additionally present.

15. A device according to the preceding claim,
**characterized in that**
a pressure sensor is present in the inlet and a pressure sensor is present in the outlet.

16. A device according to one of the claims 12 to 15,
**characterized in that**
at least one acoustic sensor is additionally present.

## Revendications

1. Procédé de détection de cavitation lors de l'écoulement d'un liquide à travers un élément de régulation (110), comprenant les étapes suivantes :
1.1 créer un état d'écoulement du liquide à travers l'élément de régulation (110), dans lequel aucune cavitation ne se produit ;
1.1.1 mesurer la transmission d'un signal ultrasonique (160) par le liquide dans une entrée (120) de l'élément de régulation dans cet état d'écoulement ;
1.1.2 mesurer la transmission d'un signal ultrasonique (165) à travers le liquide dans une sortie (125) de l'élément de régulation dans cet état d'écoulement ;
1.1.3 former une grandeur de comparaison pour comparer les deux transmissions mesurées dans cet état d'écoulement ;
1.1.4 enregistrer la grandeur de comparaison comme valeur de référence ;
1.2. mesurer la transmission d'un signal ultrasonique (160) à travers le liquide dans l'entrée (120) de l'élément de régulation dans un état de fonctionnement ;
1.3 mesurer la transmission d'un signal ultrasonique (165) à travers le liquide dans la sortie (125) de l'élément de régulation dans l'état de fonctionnement ;
1.4 former la grandeur de comparaison pour comparer les deux transmissions mesurées dans l'état de fonctionnement ;
1.5 comparer la valeur de référence avec la grandeur de comparaison déterminée dans l'état de fonctionnement ;
1.6 déterminer qu'il y a cavitation (150) lorsque la comparaison de la valeur de référence avec la grandeur de comparaison déterminée dans l'état de fonctionnement indique une diminution de la transmission du signal ultrasonique dans la sortie de l'élément de régulation de plus d'une valeur de seuil prédéterminée.

2. Procédé selon la revendication précédente,
**caractérisé**
**en ce que** l'étape de comparaison est réalisée par la formation d'un quotient.

3. Procédé selon la revendication précédente,
**caractérisé**
**en ce que** l'évolution temporelle du quotient est enregistrée ; et
**en ce que** des modifications du quotient sont enregistrées et/ou émises sous forme de message.

4. Procédé selon l'une des revendications précédentes,
**caractérisé**
**en ce que** le débit du liquide à travers l'élément de régulation (110) est régulé en modifiant les positions des composants de l'élément de régulation de telle sorte que la cavitation ne se produise plus lorsque la cavitation a été détectée.

5. Procédé selon la revendication précédente,
**caractérisé**
5.1 en ce que dans les situations où la cavitation se produit et/ou cesse de se produire,
5.1.1 les positions des composants de l'élément de régulation sont mémorisées et / ou
5.1.2 un message est émis.

6. Procédé selon la revendication précédente,
**caractérisé**
**en ce que** les positions mémorisées des composants de l'élément de régulation (110) sont utilisées comme limites pour la commande et/ou la régulation de l'élément de régulation.

7. Procédé selon la revendication précédente,
**caractérisé**
**en ce qu'**un signal d'avertissement est émis lorsqu'une position des composants de l'élément de régulation (110) se trouve en dehors des limites mémorisées pendant plus d'un temps prédéterminé.

8. Procédé selon l'une des revendications précédentes,
8.1 dans lequel au moins un émetteur (130, 135) et/ou un récepteur (140, 145) d'ultrasons étant disposé dans l'entrée (120) et la sortie (125) de l'élément de régulation (110),
**caractérisé**
8.2 en ce que la puissance de tous les émetteurs d'ultrasons (130, 135) est augmentée lorsque le signal sur au moins un des récepteurs d'ultrasons (140, 145) est trop faible.

9. Procédé selon l'une des revendications précédentes,
9.1 dans lequel au moins un émetteur (130, 135) et/ou un récepteur (140, 145) d'ultrasons étant disposé dans l'entrée (120) et la sortie (125) de l'élément de régulation (110),
**caractérisé**
9.2 en ce que les émetteurs (130, 135) et/ou les récepteurs (140, 145) d'ultrasons sont utilisés pour déterminer le débit du liquide à travers l'élément de régulation (110) ; et
9.3 en ce que le débit auquel la cavitation (150) commence et/ou ne se produit plus est enregistré et/ou émis sous forme de message.

10. Procédé selon l'une des revendications précédentes,
10.1 dans lequel un capteur de pression est respectivement disposé dans l'entrée (120) et la sortie (125) de l'élément de régulation (110),
**caractérisé**
10.2 en ce que, dans les situations où la cavitation commence et/ou ne se produit plus, la différence de pression correspondante est enregistrée.

11. Procédé selon la revendication précédente,
**caractérisé**
**en ce que**, en plus de la différence de pression, la position momentanée respective des composants de l'élément de régulation (110) est également mémorisée.

12. Dispositif (100) comprenant
12.1 un élément de régulation (110) pour régler le débit d'un liquide à travers l'élément de régulation ;
12.2 une entrée (120) vers l'élément de régulation ; et
12.3 une sortie (125) de l'élément de régulation ;
12.4 au moins un dispositif (130, 140) pour mesurer la transmission d'un signal ultrasonique (160) par le liquide dans l'entrée (120) dans l'élément de régulation (110) ; et
12.5 au moins un dispositif (135, 145) pour mesurer la transmission d'un signal ultrasonique (165) par le liquide dans la sortie (125) de l'élément de régulation ;
12.6 des moyens pour comparer les transmissions mesurées ; et comprenant
12.7 une commande pour la mise en œuvre du procédé selon l'une des revendications de procédé 1 à 11.

13. Dispositif selon la revendication précédente,
**caractérisé**
13.1 en ce que, comme dispositif pour mesurer la transmission d'un signal ultrasonique (160, 165), un émetteur d'ultrasons (130, 135) est disposé en face d'un récepteur d'ultrasons (140, 145) vu à travers le liquide
et/ou
13.2 un capteur à ultrasons, qui convient aussi bien pour l'émission que pour la réception, avec au moins un réflecteur à ultrasons disposé en face, vu à travers le liquide est prévu.

14. Dispositif selon l'une des deux revendications précédentes,
**caractérisé**
**en ce qu'**il est en outre prévu au moins un capteur de pression.

15. Dispositif selon la revendication précédente,
**caractérisé**
**en ce qu'**il est prévu un capteur de pression en entrée et un capteur de pression en sortie.

16. Dispositif selon l'une des revendications 12 à 15,
**caractérisé**
**en ce qu'**il existe en outre au moins un capteur acoustique.
